# EUROPÄISCHE PATENTSCHRIFT

(11) **EP 2 332 268 B1**
(45) Veröffentlichungstag und Bekanntmachung des Hinweises auf die Patenterteilung: **11.09.2013**
(21) Anmeldenummer: 09783601.9
(22) Anmeldetag: 30.09.2009
(51) Int. Cl.: H04B 7/185

(54) **Digitaler Signalprozessor, Kommunikationsvorrichtung, Kommunikationssystem und Verfahren zum Betreiben des digitalen Signalprozessors**
Digital signal processor, communications device, communications system and method for operating said digital signal processor
Processeur numérique de signaux, dispositif de communication, système de communication et procédé d'opération dudit processeur numérique de signaux

(30) Priorität: 01.10.2008 DE 102008042545; 01.10.2008 DE 102008042547; 01.10.2008 US 101776 P; 01.10.2008 US 101836 P
(43) Veröffentlichungstag der Anmeldung: 15.06.2011
(73) Patentinhaber: Airbus Operations GmbH, 21129 Hamburg (DE)
(72) Erfinder: SCHIRRMACHER, Martin, 21614 Buxtehude (DE)
(74) Vertreter: Isarpatent
(86) Internationale Anmeldenummer: PCT/EP2009/062692
(87) Internationale Veröffentlichungsnummer: WO 2010/037781

(56) Entgegenhaltungen:
- DE-A1-102004 049 895
- DE-A1-102005 032 141
- DE-A1-102006 036 082

## Beschreibung

Die vorliegende Erfindung bezieht sich auf einen digitalen Signalprozessor, eine Kommunikationsvorrichtung, ein Kommunikationssystem mit einem solchen digitalen Signalprozessor und ein Verfahren zum Betreiben eines solchen digitalen Signalprozessors.

Obwohl auf beliebige Bereiche anwendbar, wird die vorliegende Erfindung in Bezug mit einem Flugzeug oder mit einem Passagierflugzeug näher erläutert.

Das technische Gebiet der Erfindung betrifft Kommunikationssysteme in Flugzeugkabinen. Solche Kommunikationssysteme stellen Kommunikationsdienste oder Dienste, wie GSM, UMTS, WLAN oder dergleichen, für die Besatzung des Flugzeuges oder für Passagiere bereit.

Zur Abstrahlung des jeweiligen Dienstsignals für den entsprechenden Dienst kann eine Leckleitungsantenne (Leaky Line Antenne) eingesetzt werden, die längsseitig in der Flugzeugkabine angeordnet ist. Zur Prüfung der ordnungsgemäßen Installation und Funktion des Kommunikationssystems, insbesondere zur Sicherstellung der Hochfrequenz(HF)-Signalverteilung innerhalb der Flugzeugkabine, wird eine Abdeckungs-Messung (Funkversorgungsmessung) in jedem Frequenzband der entsprechenden Dienste mittels eines HF-Spektrumanalysators und einer Messantenne an mehreren unterschiedlichen Orten in der Flugzeugkabine durchgeführt. Dabei können die Messergebnisse je nach Zustand und Konfiguration der Flugzeugkabine und Wahl des Messortes stark variieren. Aus diesem Grund müssen die Messergebnisse in geeigneter Weise gemittelt und mit den jeweiligen Antennenfaktoren der verwendeten Messantennen korrigiert werden.

Eine ungenau oder fehlerhaft durchgeführte Messung kann unter Umständen zur Unterschreitung vorbestimmter, insbesondere behördlicher Grenzwerte führen, obgleich die behördlichen Grenzwerte tatsächlich überschritten werden. Weiter ist es möglich, dass eine Fehlermeldung ausgelöst wird, obwohl tatsächlich kein Fehler vorliegt.

Bei der herkömmlichen Messung mittels HF-Spektrumanalysator und eigens vorgesehener Messantenne müssen die jeweiligen Messungen nachteiligerweise manuell durchgeführt werden und erfordern somit einen hohen Zeit- und Kostenaufwand. Für die Durchführung und Auswertung der herkömmlichen Messungen ist ferner nachteiligerweise eigens geschultes Personal notwendig. Dieses geschulte Personal muss insbesondere Erfahrung mit HF-Messungen haben. Ferner erfordern die herkömmlichen Messungen spezielle Hardware, beispielsweise den HF-Spektrumanalysator und die Messantenne.

Um den Test an jedem beliebigen Ort in der Flugzeugkabine durchführen zu können, werden herkömmlicherweise HF-Testsignale verwendet, die einen Leistungspegel aufweisen, die einer behördlichen Genehmigung bedürfen. Diese behördliche Genehmigung ist herkömmlicherweise notwendig, da die herkömmlichen HF-Testsignale mit den verwendeten Leistungspegeln auch außerhalb des Flugzeugs noch messbar sind und potentiell Störungen anderer Dienste verursachen können.

Zur Lösung dieser Probleme ist der Anmelderin intern eine Vorrichtung bekannt, welche eine automatisierte Durchführung eines Funktionstests des Kommunikationssystems mittels eines HF-Signals beinhaltet.

Diese intern bekannte Vorrichtung hat eine Übertragungsstrecke, welche zumindest eine in der Flugzeugkabine angeordnete Leckleitungsantenne aufweist. Weiter weist diese Vorrichtung eine mit der Übertragungsstrecke gekoppelte Steuervorrichtung auf. Die Steuervorrichtung hat eine Generierungseinrichtung zum Generieren eines breitbandigen Rauschsignals und eine Mehrzahl von Sende-/Empfangseinrichtungen. Die jeweilige Sende-/Empfangseinrichtung ist dazu geeignet, ein jeweiliges, fest definiertes Dienstsignal zur Bereitstellung eines vorbestimmten Dienstes und zur Übertragung über die Übertragungsstrecke bereitzustellen. Beispielsweise sind fünf dedizierte Sende-/Empfangseinrichtungen zur Bereitstellung eines GSM-Dienstes, eines CDMA-Dienstes, eines IMT-Dienstes, eines UMTS-Dienstes und eines WLAN-Dienstes in der Vorrichtung beinhaltet.

Weiter ist eine Kombinier-Einrichtung vorgesehen, welche dazu eingerichtet ist, das bereitgestellte breitbandige Rauschsignal und die Dienstsignale zur Ausbildung eines auf die Übertragungsstrecke einzuspeisenden HF-Signals zu kombinieren.

Ferner ist eine Übertragungseinrichtung zum Einspeisen des von der Kombinier-Einrichtung bereitgestellten HF-Signals auf die Leckleitungsantenne zur Durchführung des Funktionstests des Kommunikationssystems vorgesehen.

Insgesamt braucht die der Anmelderin intern bekannte Vorrichtung zur Bereitstellung des HF-Signals mit dem Rauschsignal und dem zumindest einen Dienstsignal insgesamt zumindest drei dedizierte Vorrichtungen, nämlich die Generierungseinrichtung zum Generieren des Rauschsignals, zumindest eine Sende-/Empfangseinrichtung zum Generieren des zumindest einen Dienstsignals und die Kombinier-Einrichtung zum Kombinieren der Rausch- und Dienstsignale.

Nachteiligerweise kosten die zumindest drei dedizierten Vorrichtungen Platz und Gewicht. Gerade in Flugzeugen bedeutet ein erhöhter Platz- und Gewichtsbedarf erhebliche Kostennachteile. Eine weitere Lösung ist aus der Patentschrift DE 102 004 04 9895 bekannt.

Demnach ist es eine Aufgabe der vorliegenden Erfindung, eine platz- und gewichtsoptimierte Lösung zur Bereitstellung des HF-Signals für das Kommunikationssystem des Flugzeuges zu schaffen.

Erfindungsgemäß wird diese Aufgabe durch einen digitalen Signalprozessor mit den Merkmalen des Patentanspruchs 1, durch ein Kommunikationssystem mit den Merkmalen des Patentanspruchs 3, durch ein Verfahren mit den Merkmalen des Patentanspruchs 5, und durch eine Kommunikationsvorrichtung mit den Merkmalen des Patentanspruchs 7 gelöst.

Demgemäß wird ein digitaler Signalprozessor für ein Kommunikationssystem in einer Flugzeugkabine eines Flugzeuges bereitgestellt, wobei der digitale Signalprozessor ein Bereitstellungsmittel zum Bereitstellen eines vorbestimmbaren digitalen Signals hat, welches zur Ausbildung einer jeweiligen Wellenform mit einer vorbestimmbaren Bandbreite und mit einem vorbestimmbaren Signal-Rausch-Verhältnis zum Abbilden eines jeweiligen vorbestimmten Dienstsignals und eines vorbestimmten Rauschsignals geeignet ist, wobei das Rauschsignal zumindest ein Maskierungssignal beinhaltet, welches zum Maskieren eines jeweiligen terrestrischen Basisstationssignals, welches ein jeweiliges vorbestimmtes Frequenzband nutzt, geeignet ist.

Ferner wird ein Kommunikationssystem vorgeschlagen, welches aufweist:
- zumindest einen wie oben erläuterten digitalen Signalprozessor zur Bereitstellung eines jeweiligen digitalen Signals; und
- eine Übertragungsstrecke, welche zumindest eine in der Flugzeugkabine angeordnete Leckleitungsantenne zur Übertragung des jeweiligen digitalen Signals in die Flugzeugkabine aufweist.

Weiter wird ein Verfahren zum Betreiben eines digitalen Signalprozessors für ein Kommunikationssystem in einer Flugzeugkabine eines Flugzeuges vorgeschlagen, bei dem der digitale Signalprozessor derart eingerichtet wird, dass er zur Bereitstellung eines vorbestimmten digitalen Signals geeignet ist, welches zur Ausbildung einer jeweiligen Wellenform mit einer vorbestimmbaren Bandbreite und mit einem vorbestimmbaren Signal-Rausch-Verhältnis zum Abbilden eines jeweiligen vorbestimmten Dienstsignals und eines jeweiligen vorbestimmten Maskierungssignals geeignet ist, wobei das Rauschsignal zumindest ein Maskierungssignal beinhaltet, welches zum Maskieren eines jeweiligen terrestrischen Basisstationssignals, welches ein jeweiliges vorbestimmtes Frequenzband nutzt, geeignet ist.

Weiterhin wird eine Kommunikationsvorrichtung für ein Kommunikationssystem in einer Flugzeugkabine eines Flugzeuges vorgeschlagen, mit:
- einer Mehrzahl N von wie oben erläuterten digitalen Signalprozessoren, wobei der jeweilige digitale Signalprozessor zum Bereitstellen eines vorbestimmbaren digitalen Signals eingerichtet ist, welches zur Ausbildung einer jeweiligen Wellenform Wellenform mit einer vorbestimmbaren Bandbreite und mit einem vorbestimmbaren Signal-Rausch-Verhältnis in einem Basis-Bandbereich zur Abbildung zumindest eines jeweiligen Dienstsignals und zumindest eines jeweiligen Rauschsignals geeignet ist, wobei die Rauschsignale jeweils zumindest ein Maskierungssignal beinhalten, welche zum Maskieren eines jeweiligen terrestrischen Basisstationssignals, welches ein jeweiliges vorbestimmtes Frequenzband nutzt, geeignet sind;
- einer Mehrzahl M von Front-End-Modulen, wobei das jeweilige Front-End-Modul zumindest dazu eingerichtet ist, die jeweilige Wellenform zur Ausbildung eines HF-Signals in einen vorbestimmten Hochfrequenzbereich zu mischen; und
- einer steuerbaren Schalteinrichtung, welche zumindest einen digitalen Signalprozessor in Abhängigkeit von zumindest einem Steuersignal auf zumindest ein Front-End-Modul schaltet.

Ein Vorteil der vorliegenden Erfindung liegt darin, dass mittels des digitalen Signalprozessors (DSP) nicht nur ein jeweiliges vorbestimmtes Dienstsignal für einen vorbestimmten Dienst, sondern auch ein vorbestimmtes Rauschsignal oder Maskierungssignal für die Maskierung zumindest einen jeweiligen Basisstationssignals einer Basisstation bereitgestellt werden kann.

Durch die Integration der Generierung des Rauschsignals in den digitalen Signalprozessor werden erfindungsgemäß Platz und damit Kosten eingespart.

Weiter ist erfindungsgemäß das jeweilige Dienstsignal vorbestimmbar und damit in Abhängigkeit einer programmierbaren Vorgabe einstellbar. Dadurch ist es möglich zu einem ersten Zeitpunkt einen ersten Dienst, beispielsweise GSM, und zu einem zweiten Zeitpunkt einen zweiten Dienst, beispielsweise IMT, mittels eines einzigen digitalen Signalprozessors anzubieten.

In den Unteransprüchen finden sich vorteilhafte Ausgestaltungen und Verbesserungen der Erfindung.

Gemäß einer bevorzugten Ausgestaltung ist das jeweilige Dienstsignal zur Bereitstellung eines vorbestimmten Dienstes, wie GSM, UMTS oder WLAN, geeignet.

Gemäß einer bevorzugten Ausgestaltung des Kommunikationssystems der Erfindung ist eine Software-Defined-Radio-Einrichtung vorgesehen, welche die Anzahl der digitalen Signalprozessoren umfasst.

Weiter wird ein Computerprogramm-Produkt vorgeschlagen, welches auf einer programmgesteuerten Einrichtung die Durchführung eines wie oben beschriebenen Verfahrens gemäß der Erfindung veranlasst.

Ein Computerprogramm-Produkt wie ein Computerprogramm-Mittel kann beispielsweise als Speichermedium, wie Speicherkarte, USB-Stick, Floppy, CD-ROM, DVD oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogramm-Produkt oder dem Computerprogramm-Mittel erfolgen.

Die Erfindung wird im Folgenden anhand von Ausführungsbeispielen unter Bezugnahme auf die beiliegenden Figuren näher erläutert.

Von den Figuren zeigen:
- Fig. 1: ein schematisches Blockschaltbild eines Ausführungsbeispiels des digitalen Signalprozessors gemäß der Erfindung;
- Fig. 2: ein schematisches Amplituden-Frequenz-Diagramm mit einem Ausführungsbeispiel der Wellenform gemäß der Erfindung und drei terrestrischen Basisstations-Signalen;
- Fig. 3: ein schematisches Blockschaltbild eines Ausführungsbeispiels des Kommunikationssystems gemäß der Erfindung;
- Fig. 4: ein schematisches Blockschaltbild eines Ausführungsbeispiels der Kommunikationsvorrichtung gemäß der Erfindung; und
- Fig. 5: ein schematisches Ablaufdiagramm eines Ausführungsbeispiels eines Verfahrens zum Betreiben eines digitalen Signalprozessors für ein Kommunikationssystem in einer Flugzeugkabine eines Flugzeuges.

In den Figuren bezeichnen dieselben Bezugszeichen gleiche oder funktionsgleiche Komponenten - sofern nichts Gegenteiliges angegeben ist.

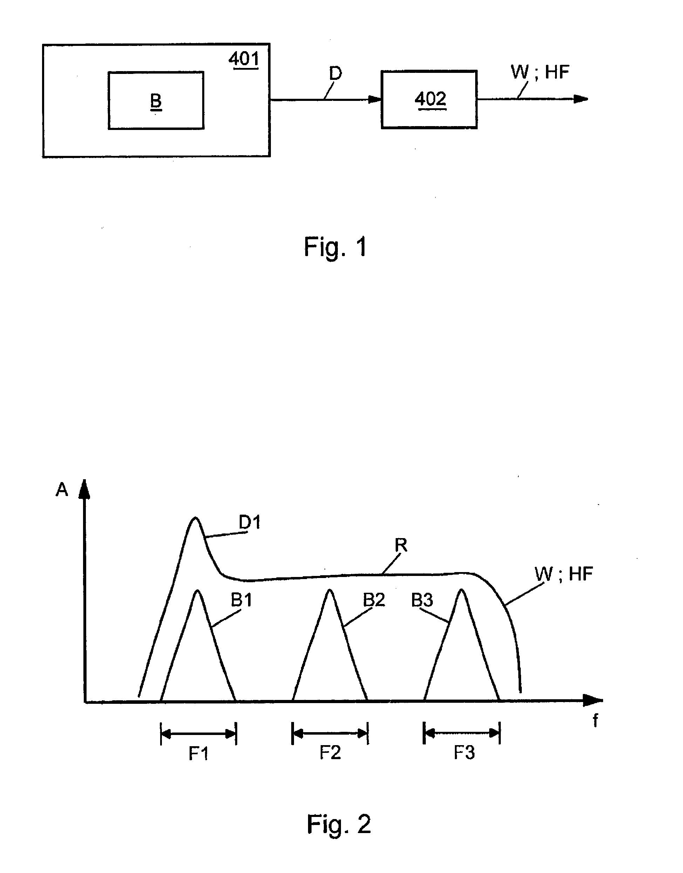

Fig. 1 zeigt ein schematisches Blockschaltbild eines Ausführungsbeispiels des digitalen Signalprozessors 401 gemäß der Erfindung.

Der digitale Signalprozessor 401 hat ein Bereitstellungsmittel B zum Bereitstellen eines vorbestimmbaren digitalen Signals D. Das jeweilige vorbestimmbare digitale Signal D ist zur Ausbildung einer jeweiligen Wellenform W zum Abbilden eines jeweiligen vorbestimmten Dienstsignals D1 und eines vorbestimmten Rauschsignals R geeignet. Die jeweilige Wellenform W bildet ein Hochfrequenzsignal HF aus. Zum Wandeln des digitalen Signals D in die jeweilige Wellenform W ist ein Digital-Analog-Konverter 402 vorgesehen. Der digitale Signalprozessor 401 und der Digital-Analog-Konverter 402 bilden insbesondere eine Kommunikationsvorrichtung 400 aus.

Vorzugsweise ist das Bereitstellungsmittel B dazu eingerichtet, das jeweilige digitale Signal D derart auszubilden, dass dieses zur Ausbildung einer jeweiligen Wellenform W mit einer vorbestimmbaren Bandbreite und mit einem vorbestimmten Signal-Rauschverhältnis zum Abbilden des jeweiligen vorbestimmten Dienstsignals D1 und des jeweiligen vorbestimmen Rauschsignals R geeignet ist.

Vorzugsweise ist das jeweilige Dienstsignal D1 zur Bereitstellung eines vorbestimmbaren Dienstes, wie GSM, UMTS oder WLAN geeignet.

Vorzugsweise beinhaltet das bereitgestellte breitbandige Rauschsignal R zumindest ein Maskierungssignal M1-M3, wobei das jeweilige Maskierungssignal M1-M3 zum Maskieren eines jeweiligen terrestrischen Basisstationssignals B1-B3 geeignet ist. Das jeweilige terrestrische Basisstationssignals B1-B3 nutzt vorzugsweise ein jeweiliges vorbestimmtes Frequenzband F1-F3.

Das Bereitstellungsmittel B ist insbesondere softwaretechnisch in dem digitalen Signalprozessors 401 implementiert.

Dabei kann das Bereitstellungsmittel B als Computerprogramm-produkt, als eine Funktion, als eine Routine, als Teil eines Programmcodes oder als ausführbares Objekt ausgebildet sein.

Dazu zeigt Fig. 2 ein schematisches Amplituden-Frequenz-Diagramm mit einem Ausführungsbeispiel der Wellenform W bzw. des HF-Signals HF gemäß der Erfindung und den drei terrestrischen Basisstationssignalen B1-B3. Gemäß Fig. 2 umfasst das HF-Signal HF das Rauschsignal R und das darüber gelagerte Dienstsignal D1.

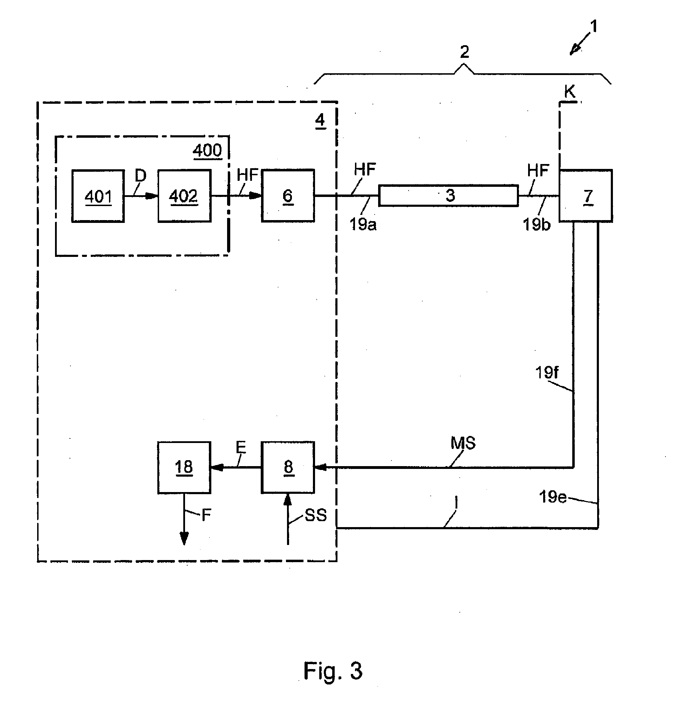

In Fig. 3 ist ein schematisches Blockschaltbild eines Ausführungsbeispiels des Kommunikationssystems 1 gemäß der Erfindung dargestellt. Das Kommunikationssystem 1 weist eine Übertragungsstrecke 2, eine mit der Übertragungsstrecke 2 gekoppelte Steuervorrichtung 4, zumindest eine an einer vorbestimmten Koppelstelle K mit der Übertragungsstrecke 2 gekoppelte Messeinrichtung 7 und ein Auswertemittel 8 auf.

Die Übertragungsstrecke 2 weist zumindest eine in der Flugzeugkabine angeordnete Leckleitungsantenne 3 auf. Die Leckleitungsantenne 3 ist beispielsweise als eine Koaxialleitung mit einer Mehrzahl von Perforierungen ausgebildet.

Die Steuervorrichtung 4 ist beispielsweise mittels einer Leitung 19a mit der Leckleitungsantenne 3 gekoppelt. Ferner hat die Steuervorrichtung 4 eine Software-Defined-Radio-Einrichtung 400.

Die Software-Defined-Radio-Einrichtung 400 hat eine Anzahl von digitalen Signalprozessoren 401 zur Bereitstellung eines jeweiligen digitalen Signals D. Weiter hat die Steuervorrichtung 4 eine Übertragungseinrichtung 6 zum Einspeisen des HF-Signals HF auf die Leckleitungsantenne 3, wobei das eingespeiste HF-Signal HF einen vorbestimmten Leistungspegel hat. Zwischen der Übertragungseinrichtung 6 und dem jeweiligen digitalen Signalprozessor 401 ist ein Digital-Analog-Konverter (DAC) geschaltet. Der jeweilige Digital-Analog-Konverter (DAC) wandelt das jeweilige digitale Signal D in die jeweilige Wellenform W, welche das jeweilige HF-Signal HF ausbildet. Ohne Einschränkung der Allgemeinheit zeigt Fig. 3 nur einen digitalen Signalprozessor 401.

Das bereitgestellte Rauschsignal R ist breitbandig gegenüber einer Kohärenzbandbreite der Übertragungsstrecke 2. Weiter beinhaltet das bereitgestellte breitbandige Rauschsignal R vorzugsweise zumindest ein Maskierungssignal M1-M3. Das jeweilige Maskierungssignal M1-M3 ist zum Maskieren eines jeweiligen terrestrischen Basisstations-Signals B1-B3, welches ein jeweiliges vorbestimmtes Frequenzband F1-F3 nutzt, geeignet (vgl. Fig. 2).

Die Messeinrichtung 7 ist zur Messung des Leistungspegels des HF-Signals HF an der vorbestimmten Koppelstelle K geeignet, um ein zu dem gemessenen Leistungspegel proportionales Messsignal MS bereitzustellen. Die Messeinrichtung 7 ist beispielsweise mittels einer Leitung 19b mit der Leckleitungsantenne 3 gekoppelt. Weiter wird die Messeinrichtung 7 von der Steuervorrichtung 4 mittels einer Leitung 19e mit Strom I versorgt. Ferner überträgt die Messeinrichtung 7 das Messsignal MS mittels einer Leitung 19f an das Auswertemittel 8.

Die Messeinrichtung 7 hat eine HF-Terminierung. Zur HF-Terminierung weist die Messeinrichtung 7 beispielsweise einen Abschlusswiderstand 9 auf. Alternativ kann die Messeinrichtung 7 mit einem Abschlusswiderstand 9 gekoppelt sein. Das Messsignal MS ist beispielsweise als ein Gleichspannungssignal, als ein Stromsignal oder als ein Frequenzsignal ausgebildet. Die Messeinrichtung 7 kann beispielsweise als ein HF-Detektor ausgebildet sein, welcher dazu eingerichtet ist, den Leistungspegel des HF-Signals HF an der Koppelstelle K in ein proportionales Gleichspannungssignal zu wandeln.

Das Auswertemittel 8 ist dazu eingerichtet, ein Testergebnis E mittels eines Vergleiches zwischen dem bereitgestellten Messsignal MS und einem von dem Leistungspegel des eingespeisten HF-Signals HF abhängigen Sollsignal SS bereitzustellen.

Weiter weist die Steuervorrichtung 4 vorzugsweise ein Fehlerdetektionsmittel 18 auf. Das Fehlerdetektionsmittel 18 ist dazu eingerichtet, einen Fehler F auf der Übertragungsstrecke 2 in Abhängigkeit des von dem Auswertemittel 8 bereitgestellten Testergebnisses E zu detektieren.

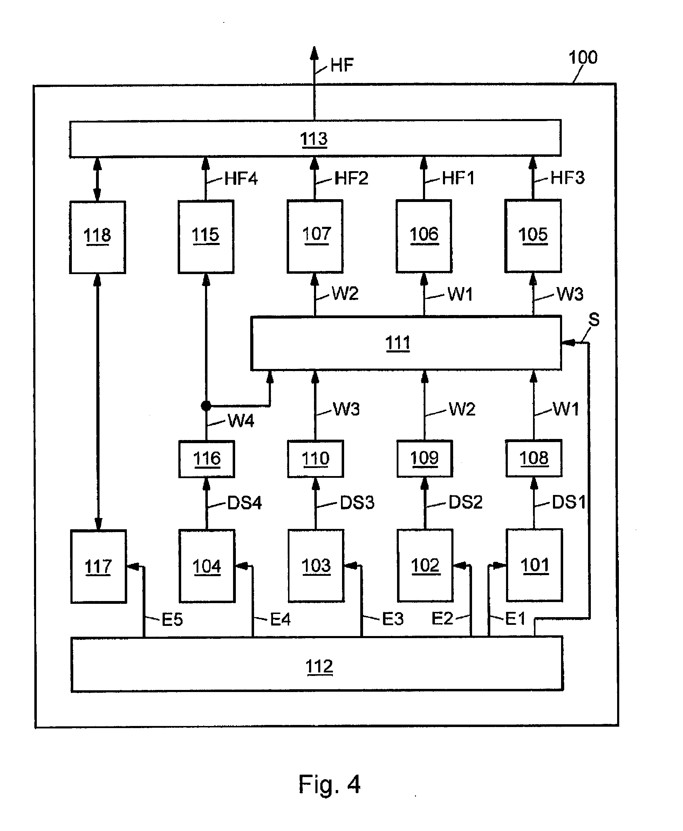

Die Software-Defined-Radio-Einrichtung 400 nach Fig. 3 ist vorzugsweise als eine Kommunikationsvorrichtung 100 nach Fig. 4 ausgebildet. Damit kann die Kommunikationsvorrichtung 100 nach Fig. 4 die Software-Defined-Radio-Einrichtung 400 in Fig. 3 ersetzen.

Dazu zeigt Fig. 4 ein schematisches Blockschaltbild eines Ausführungsbeispiels der Kommunikationsvorrichtung 100 gemäß der Erfindung.

Die Kommunikationsvorrichtung 100 nach Fig. 4 hat eine Mehrzahl N von digitalen Signalprozessoren 101-104, eine Mehrzahl M von Front-End-Modulen 105-107 und eine steuerbare Schalteinrichtung 111. Ohne Einschränkung der Allgemeinheit ist die Anzahl N der digitalen Signalprozessoren in Fig. 4 gleich 4 und die Anzahl M der Front-End-Module ist gleich 5.

Der jeweilige digitale Signalprozessor 101-104 ist dazu eingerichtet, ein vorbestimmbares digitales Signal DS1-DS3 bereitzustellen. Das jeweilige digitale Signal DS1-DS3 ist dazu eingerichtet, eine jeweilige Wellenform W1-W3 in einem Basisbandbereich zur Ausbildung zumindest eines jeweiligen Dienstsignals D1-D3 und/oder zumindest eines jeweiligen Rauschsignals R auszubilden. Zur Umwandlung des jeweiligen digitalen Signals DS1-DS3 in die analoge Wellenform W1-W3 ist ein Digital-Analog-Konverter oder Digital-Analog-Wandler 108-110 vorgesehen.

Die steuerbare Schalteinrichtung 111 ist dazu eingerichtet, zumindest einen digitalen Signalprozessor 101-104 in Abhängigkeit von zumindest einem Steuersignal S auf zumindest ein Front-End-Modul 105-107 zu schalten.

In dem Ausführungsbeispiel nach Fig. 4 schaltet die Schalteinrichtung 111 den ersten digitalen Signalprozessor 101 auf das zweite Front-End-Modul 106, den zweiten digitalen Signalprozessor 102 auf das dritte Front-End-Modul 107 und den dritten digitalen Signalprozessor 103 auf erste Front-End-Modul 105.

Das jeweilige Front-End-Modul 105-107 ist dazu eingerichtet, die jeweilige Wellenform W1-W3 zur Ausbildung des HF-Signals HF in einen vorbestimmten Hochfrequenzbereich zu mischen. Dabei ist das jeweilige Front-End-Modul 105-107 insbesondere dazu eingerichtet, die von dem jeweiligen digitalen Signalprozessor 101-103 übertragene Wellenform W1-W3 im Basisbandbereich zu empfangen und diese in dem jeweiligen vorbestimmten Hochfrequenzbereich zu mischen. Weiter ist der jeweilige digitale Signalprozessor 101-104 dazu eingerichtet, die jeweilige Wellenform W1-W3 in dem Basisbandbereich zur Bereitstellung zumindest eines vorbestimmten Dienstes und/oder zur Bereitstellung zumindest einer vorbestimmten Maskierung zu generieren und an das jeweilige geschaltete Front-End-Modul 105-107 zu übertragen.

Vorzugsweise weist die Kommunikationsvorrichtung 100 weiter eine Steuervorrichtung 112 auf, welche die Schalteinrichtung 111 mittels des zumindest einen Steuersignals S steuert. Dabei ist die Steuervorrichtung 112 beispielsweise dazu eingerichtet, zumindest zwei digitale Signalprozessoren 101-104 mittels des zumindest einen Steuersignals S auf ein einzelnes vorbestimmtes Front-End-Modul 105-107 zu schalten.

Die Steuervorrichtung 112 kann auch dazu eingerichtet werden, die N digitalen Signalprozessoren 101-104 mittels des zumindest einen Steuersignals auf die M Front-End-Module 105-107 zu schalten. Beispielsweise generiert dazu die Steuervorrichtung 112 N Steuersignale.

Vorzugsweise werden die M Front-End-Module 105-107 derart eingerichtet, dass der jeweilige vorbestimmte Hochfrequenzbereich des jeweiligen Front-End-Moduls 105-107 einem Frequenzbereich der vorbestimmten Dienste entspricht.

Dann kann auch die Steuervorrichtung 112 vorzugsweise dazu eingerichtet werden, den jeweiligen Funkverkehr in dem jeweiligen Frequenzbereich des jeweiligen vorbestimmten Dienstes innerhalb der Flugzeugkabine zu überwachen und die N Steuersignale S in Abhängigkeit der Überwachung des Funkverkehrs in dem Frequenzbereich zumindest eines vorbestimmten Dienstes zu generieren.

Weiter kann die Steuervorrichtung 112 dazu eingerichtet werden, ein jeweiliges Einstellsignal E1-E3 für den jeweiligen digitalen Signalprozessor 101-103 in Abhängigkeit der Überwachung des Funkverkehrs in dem Frequenzbereich des jeweiligen Dienstes zu generieren und eine Leistung des jeweiligen digitalen Signalprozessors 101-103 mittels des generierten Einstellsignals E1-E3 einzustellen. Dabei kann die Steuervorrichtung 112 beispielsweise derart eingerichtet werden, dass eine Anzahl von Nutzkanälen des jeweiligen digitalen Signalprozessors 101-103 und/oder eine Taktrate des jeweiligen digitalen Signalprozessors 101-103 mittels des jeweiligen Einstellsignals E1-E3 eingestellt wird.

Die Kommunikationsvorrichtung 100 ist vorzugsweise als eine Software-Defined-Radio-Einrichtung ausgebildet. Die Software-Defined-Radio-Einrichtung 100 weist weiter vorzugsweise eine Kombiniereinrichtung 113 auf, welche dazu eingerichtet ist, die von den Front-End-Modulen 105-107 bereitgestellten Wellenformen W1-W3 im Hochfrequenzbereich zur Ausbildung des HF-Signals zu kombinieren.

Weiter weist die Kommunikationsvorrichtung 100 vorzugsweise einen weiteren DSP 414 und ein mit dem DSP 414 gekoppeltes Front-End-Modul 415 zur Bereitstellung eines Rauschsignals oder Maskierungssignals HF4 in einem vorbestimmten Frequenzbereich, beispielsweise 450-900 MHz auf. Weiterhin ist der weitere DSP 414 auch mit der Schalteinrichtung 411 koppelbar. Insbesondere sind der weitere DSP 414 und das weitere Front-End-Modul 415 dazu geeignet, einen bestimmten Rauschteppich in Abhängigkeit der absoluten Ortsposition des Flugzeuges zu generieren.

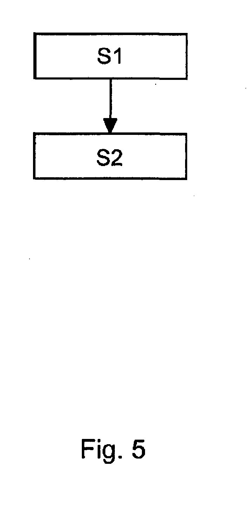

Fig. 5 zeigt ein schematisches Ablaufdiagramm eines Ausführungsbeispiels eines Verfahrens zum Betreiben eines digitalen Signalprozessors 401 für ein Kommunikationssystem 1 in einer Flugzeugkabine eines Flugzeuges.

Nachfolgend wird das erfindungsgemäße Verfahren anhand des Blockschaltbildes in Fig. 5 mit Bezug auf die Blockschaltbilder der Figuren 1 bis 4 erläutert. Das erfindungsgemäße Verfahren gemäß Fig. 5 weist die Verfahrensschritte S1 bis S5 auf:

### Verfahrensschritt S1 :

Es wird ein digitaler Signalprozessor 401 für ein Kommunikationssystem 1 in einer Flugzeugkabine eines Flugzeuges bereitgestellt.

### Verfahrensschritt S2 :

Der digitale Signalprozessor 401 wird derart eingerichtet, dass er zur Bereitstellung eines vorbestimmten digitalen Signals D geeignet ist, welches zur Ausbildung einer jeweiligen Wellenform W zum Abbilden eines jeweiligen vorbestimmten Dienstsignals D1 und eines jeweiligen vorbestimmten Rauschsignals R geeignet ist.

Obwohl die vorliegende Erfindung anhand bevorzugter Ausführungsbeispiele beschrieben wurde, ist sie darauf nicht beschränkt, sondern durch Ansprüche 1-7 definiert.

### Bezugszeichenliste

- 1: Kommunikationssystem
- 2: Übertragungsstrecke
- 3: Leckleitungsantenne
- 4: Steuervorrichtung
- 6: Übertragungseinrichtung
- 7: Messeinrichtung
- 8: Auswertemittel
- 9: Abschlusswiderstand
- 14: Auswahlmittel
- 15: Triggermittel
- 18: Fehlerdetektionsmittel
- 19a-19e: Leitung

- A: Leistungspegel
- D1: Dienstsignal
- E: Testergebnis, Testergebnis-vektor
- F: Fehler
- F1-F3: Frequenzband
- HF: HF-Signal
- I: Strom
- MS: Messsignal
- R: Rauschsignal
- SS: Sollsignal
- S1, S2: Verfahrensschritt

## Patentansprüche

1. Digitaler Signalprozessor (401) für ein Kommunikationssystem in einer Flugzeugkabine eines Flugzeuges,
**dadurch gekennzeichnet,**
**dass** ein Bereitstellungsmittel (B) zum Bereitstellen eines vorbestimmbaren digitalen Signals (D) vorgesehen ist, welches zur Ausbildung einer jeweiligen Wellenform (W) mit einer vorbestimmbaren Bandbreite und mit einem vorbestimmbaren Signal-Rausch-Verhältnis zum Abbilden eines jeweiligen vorbestimmten Dienstsignals (D1) und eines vorbestimmten Rauschsignals (R) geeignet ist, wobei das Rauschsignal (R) zumindest ein Maskierungssignal (M1-M3) beinhaltet, welches zum Maskieren eines jeweiligen terrestrischen Basisstationssignals (B1-B3), welches ein jeweiliges vorbestimmtes Frequenzband (F1-F3) nutzt, geeignet ist.

2. Digitaler Signalprozessor nach Anspruch 1,
**dadurch gekennzeichnet,**
**dass** das jeweilige Dienstsignal (D1) zur Bereitstellung eines vorbestimmten Dienstes, wie GSM, UMTS oder WLAN, geeignet ist.

3. Kommunikationssystem (1), mit:
- einer Anzahl von digitalen Signalprozessoren (401) zur Bereitstellung eines jeweiligen digitalen Signals (D) nach einem der Ansprüche 1 und 2; und
- einer Übertragungsstrecke (2), welche zumindest eine in der Flugzeugkabine angeordnete Leckleitungsantenne (3) zur Übertragung einer jeweiligen in Abhängigkeit einer jeweiligen in Abhängigkeit des jeweiligen digitalen Signals (D) ausgebildeten Wellenform (W) in die Flugzeugkabine aufweist.

4. Kommunikationssystem nach Anspruch 3,
**dadurch gekennzeichnet,**
**dass** eine Software-Defined-Radio-Einrichtung (400) vorgesehen ist, welche die Anzahl der digitalen Signalprozessoren (401) umfasst.

5. Verfahren zum Betreiben eines digitalen Signalprozessors (401) für ein Kommunikationssystem (1) in einer Flugzeugkabine eines Flugzeuges,
**dadurch gekennzeichnet,**
**dass** der digitale Signalprozessor (401) derart eingerichtet wird, dass er zur Bereitstellung eines vorbestimmten digitalen Signals (D) geeignet ist, welches zur Ausbildung einer jeweiligen Wellenform (W) mit einer vorbestimmbaren Bandbreite und mit einem vorbestimmbaren Signal-Rausch-Verhältnis zum Abbilden eines jeweiligen vorbestimmten Dienstsignals (D1) und eines jeweiligen vorbestimmten Rauschsignals (R) geeignet ist, wobei das Rauschsignal (R) zumindest ein Maskierungssignal (M1-M3) beinhaltet, welches zum Maskieren eines jeweiligen terrestrischen Basisstationssignals (B1-B3), welches ein jeweiliges vorbestimmtes Frequenzband (F1-F3) nutzt, geeignet ist.

6. Computerprogramm-Produkt, welches auf einer programmgesteuerten Einrichtung die Durchführung eines Verfahrens nach Anspruch 5 veranlasst.

7. Kommunikationsvorrichtung für ein Kommunikationssystem (1) in einer Flugzeugkabine eines Flugzeuges, mit:
- einer Mehrzahl N von digitalen Signalprozessoren nach Anspruch 1, wobei der jeweilige digitale Signalprozessor zum Bereitstellen eines vorbestimmbaren digitalen Signals eingerichtet ist, welches zur Ausbildung einer jeweiligen Wellenform mit einer vorbestimmbaren Bandbreite und mit einem vorbestimmbaren Signal-Rausch-Verhältnis in einem BasisBandbereich zur Abbildung zumindest eines jeweiligen Dienstsignals und zumindest eines jeweiligen Rauschsignals geeignet ist, wobei die Rauschsignale jeweils zumindest ein Maskierungssignal beinhalten, welche zum Maskieren eines jeweiligen terrestrischen Basisstationssignals, welches ein jeweiliges vorbestimmtes Frequenzband nutzt, geeignet sind;
- einer Mehrzahl M von Front-End-Modulen, wobei das jeweilige Front-End-Modul zumindest dazu eingerichtet ist, die jeweilige Wellenform zur Ausbildung eines HF-Signals in einen vorbestimmten Hochfrequenzbereich zu mischen; und
- einer steuerbaren Schalteinrichtung, welche zumindest einen digitalen Signalprozessor in Abhängigkeit von zumindest einem Steuersignal auf zumindest ein Front-End-Modul schaltet.

## Claims

1. Digital signal processor (401) for a communication system in an aircraft cabin of an aircraft, **characterised in that** a provision means (B) is provided for provision of a predeterminable digital signal (D) which is suitable for formation of a respective waveform (W) with a predeterminable band width and with a predeterminable signal to noise ratio for mapping of a respective predetermined service signal (D1) and of a predetermined noise signal (R), wherein the noise signal (R) contains at least one masking signal (M1-M3) which is suitable for masking a respective terrestrial base station signal (B1B3) which uses a respective predetermined frequency band (F1-F3).

2. Digital signal processor as claimed in claim 1, **characterised in that** the respective service signal (D1) is suitable for provision of a predetermined service, such as GSM, UMTS or WLAN.

3. Communication system (1) having:
- a number of digital signal processors (401) for provision of a respective digital signal (D) as claimed in any one of claims 1 and 2; and
- a transmission path (2) which has at least one leaky line antenna (3), which is arranged in the aircraft cabin, for transmission of a respective waveform (W), which is formed in dependence upon a respective in dependence upon the respective digital signal (D), into the aircraft cabin.

4. Communication system as claimed in claim 3, **characterised in that** a software-defined radio device (400) is provided, which comprises the number of digital signal processors (401).

5. Method for operation of a digital signal processor (401) for a communication system (1) in an aircraft cabin of an aircraft, **characterised in that** the digital signal processor (401) is arranged such that it is suitable for provision of a predetermined digital signal (D) which is suitable for formation of a respective waveform (W) with a predeterminable band width and with a predeterminable signal to noise ratio for mapping of a respective predetermined service signal (D1) and of a respective predetermined noise signal (R), wherein the noise signal (R) contains at least one masking signal (M1-M3) which is suitable for masking a respective terrestrial base station signal (B1-B3) which uses a respective predetermined frequency band (F1-F3).

6. Computer program product which causes a method as claimed in claim 5 to be carried out on a program-controlled device.

7. Communication apparatus for a communication system (1) in an aircraft cabin of an aircraft, having:
- a plurality N of digital signal processors as claimed in claim 1, wherein the respective digital signal processor is arranged for provision of a predeterminable digital signal which is suitable for formation of a respective waveform with a predeterminable band width and with a predeterminable signal to noise ratio in a base band range for mapping of at least one respective service signal and of at least one respective noise signal, wherein the noise signals each contain at least one masking signal, which are suitable for masking a respective terrestrial base station signal which uses a respective predetermined frequency band;
- a plurality M of front-end modules, wherein the respective front-end module is arranged at least to mix the respective waveform for formation of a HF signal into a predetermined high-frequency range; and
- a controllable switching device which switches at least one digital signal processor to at least one front-end module in dependence upon at least one control signal.

## Revendications

1. Processeur numérique de signaux (401) pour un système de communication dans une cabine d'aéronef d'un aéronef, **caractérisé par le fait qu'**un moyen de mise à disposition (B) est prévu pour mettre à disposition un signal numérique (D) prédéterminable, qui est adapté pour former une forme d'ondes (W) respective avec une largeur de bande prédéterminable et avec un rapport signal-bruit prédéterminable pour reproduire un signal de service (D1) respectif prédéterminé et un signal de bruit (R) prédéterminé, le signal de bruit (R) comprenant au moins un signal de masquage (M1 à M3), qui est adapté pour masquer un signal de station de base terrestre (B1 à B3) respectif, qui utilise une bande de fréquence (F1 à F3) respective prédéterminée.

2. Processeur numérique de signaux selon la revendication 1, **caractérisé par le fait que** le signal de service respectif (D1) est adapté à la mise à disposition d'un service prédéterminé, comme les services GSM, UMTS ou WLAN.

3. Système de communication (1), comportant :
- un nombre de processeurs numériques de signaux (401) pour la mise à disposition d'un signal numérique (D) respectif selon l'une des revendications 1 et 2 ; et
- une ligne de transmission (2), qui présente au moins une antenne à conduite de retour (3) disposée dans la cabine d'aéronef pour la transmission d'une forme d'ondes (W) formée en fonction d'un signal numérique (D) respectif dans la cabine d'aéronef.

4. Système de communication selon la revendication 3, **caractérisé par le fait qu'**un dispositif de radio réalisée par logiciel (400) est prévu, qui comprend le nombre des processeurs numériques de signaux (401).

5. Procédé d'exploitation d'un processeur numérique de signaux (401) pour un système de communication (1) dans une cabine d'aéronef d'un aéronef, **caractérisé par le fait que** le processeur numérique de signaux (401) est conçu de telle sorte qu'il est adapté à la mise à disposition d'un signal numérique (D) prédéterminé, qui est adapté pour former une forme d'ondes (W) respective avec une largeur de bande prédéterminable et avec un rapport signal-bruit prédéterminable pour reproduire un signal de service (D1) respectif prédéterminé et un signal de bruit (R) respectif prédéterminé, le signal de bruit (R) comprenant au moins un signal de masquage (M1 à M3), qui est adapté pour masquer un signal de station de base terrestre (B1 à B3) respectif, qui utilise une bande de fréquence (F1 à F3) respective prédéterminée.

6. Progiciel informatique qui déclenche l'exécution sur un dispositif commandé par programme d'un procédé selon la revendication 5.

7. Dispositif de communication pour un système de communication (1) dans une cabine d'aéronef d'un aéronef, comportant :
- une pluralité N de processeurs numériques de signaux selon la revendication 1, le processeur numérique de signaux respectif étant conçu pour la mise à disposition d'un signal numérique prédéterminable, qui est adapté pour former une forme d'ondes respective avec une largeur de bande prédéterminable et avec un rapport signal-bruit prédéterminable dans une plage de bande de base pour reproduire au moins un signal de service respectif et au moins un signal de bruit respectif, les signaux de bruit comprenant respectivement au moins un signal de masquage, qui sont adaptés pour masquer un signal de station de base terrestre respectif, qui utilise une bande de fréquence respective prédéterminée ;
- une pluralité M de modules avant, le module avant respectif étant conçu pour mélanger la forme d'ondes respective pour former un signal HF dans une plage haute fréquence prédéterminée ; et
- un dispositif de commutation réglable, qui commute au moins un processeur numérique de signaux en fonction d'au moins un signal de commande sur au moins un module avant.
